# EUROPÄISCHE PATENTSCHRIFT

(11) **EP 1 287 752 B1**
(45) Veröffentlichungstag und Bekanntmachung des Hinweises auf die Patenterteilung: **29.09.2004**
(21) Anmeldenummer: 02010995.5
(22) Anmeldetag: 17.05.2002
(51) Int. Cl.: A23L 3/36, A23B 4/06, A23B 7/04

(54) **Verfahren zum Portionieren gefrorener Lebensmittel**
Method for portioning frozen foods
Méthode pour mettre en portion des aliments congelés

(30) Priorität: 28.08.2001 DE 10141989
(43) Veröffentlichungstag der Anmeldung: 05.03.2003
(73) Patentinhaber: Nienstedt GmbH, 45721 Haltern (DE)
(72) Erfinder: Groneberg-Nienstedt, Petra, 40237 Düsseldorf (DE)
(74) Vertreter: COHAUSZ DAWIDOWICZ HANNIG & PARTNER

(56) Entgegenhaltungen:
- US-A- 3 924 012
- US-A- 5 037 350

## Beschreibung

Die Erfindung betrifft ein Verfahren zum Portionieren gefrorener Lebensmittel insbesondere mit Stücken von Fleisch, Fisch und/oder Gemüse.

Es ist bekannt, Fischfilets gleich nach dem Fang des Fisches in großen Blöcken tiefzufrieren. Diese Blöcke werden dann später in Scheiben zersägt, die dann wiederum in Streifen und danach in Einzelportionen gesägt werden, wie dies aus der deutschen Patentschrift 43 34 107 bekannt ist. Ferner ist es aus der deutschen Offenlegungsschrift 23 47 280 bekannt, die tiefgefrorenen Tafeln, die aus einem tiefgefrorenen Block gesägt wurden, durch Stanzen in Einzelportionen zu zerlegen. Bei diesem bekannten Verfahren werden zuerst große Blöcke tiefgefrorener Lebensmittel hergestellt.

US-A-5037350 offenbart eine Methode zur Portionierung von Lebensmitteln. Die zerkleinerten Lebensmittel werden auf eine Temperatur zwischen -0,6 und -2,2°C gekühlt, auf ein Förderband auf eine eingestellte Höhe gewalzt, mit Hilfe eines Stanzgitters in hexagonale Stücke gestanzt und mit einer Pressvorrichtung separiert. Die Portionen werden anschließend abgepackt und tiefgefroren.

US-A-3924012 offenbart eine Methode zur Portionierung von gefrorenen Lebensmitteln wie z.B. Fisch Fleisch oder Gemüse. Die Lebensmittel werden in Blöcke geformt, auf eine Temperatur zwischen -10 und -5°C gebracht und mit Hilfe einer Stanzvorrichtung in kleine Stücke geschnitten.

Aufgabe der Erfindung ist es, ein Verfahren der eingangs genannten Art so zu verbessern, dass ein Vorabherstellen großer Blöcke tiefgefrorener Lebensmittel nicht erforderlich ist.

Diese Aufgabe wird erfindungsgemäß dadurch gelöst, dass das Lebensmittel im nicht gefrorenen Zustand oder im gering gefrorenen (nicht tiefgefrorenen) Zustand in die Form einer flachen Platte oder eines plattenförmigen Stranges gebracht wird, dass danach das Lebensmittel auf eine Temperatur heruntergekühlt wird, bei der das Lebensmittel stanzfähig ist, und dass dann das Lebensmittel durch ein Stanzgitter oder eine Walze mit Stanzgitter in eine Vielzahl von Portionen aufgeteilt wird.

Das Lebensmittel wird somit vorab nicht tiefgefroren und es werden keine tiefgefrorenen großen Blöcke aus dem betreffenden Lebensmittel hergestellt, um daraus Platten zu sägen, sondern vor dem Tieffrieren wird eine Lebensmittelmasse hergestellt, die nur gering gekühlt und nicht tiefgefroren wurde. Diese Masse wird dann nur soweit heruntergekühlt, dass sie stanzfähig und insbesondere zusätzlich formfähig ist. Das Herstellen großer Blöcke ist damit vorab nicht mehr erforderlich, sondern es werden vor dem Tiefgefrieren die einzelnen Portionen durch Stanzen hergestellt, so dass die Herstellung besonders einfach und verlustminimiert ist, da ein Zerspanen nicht mehr erfolgt. Hierdurch werden ferner die Herstellungszeiten wesentlich verringert.

Zusätzlich können während oder nach dem Stanzen die Portionen durch Pressen verformt werden, so dass die Einzelportionen danach nicht quaderförmig, sondern abgerundet sind. Vorzugsweise wird vorgeschlagen, dass beim Stanzen das Lebensmittel eine Temperatur von minus 1 bis minus 10 Grad, insbesondere von minus 2 bis minus 6 Grad Celsius aufweist.

Von Vorteil ist, wenn beim Stanzen das Lebensmittel eine Dicke von 10 bis 40 mm insbesondere von 15 bis 20 mm aufweist. Auch wird vorteilhafterweise vorgeschlagen, dass die quaderförmigen insbesondere würfelförmigen Portionen eine Kantenlänge von nicht mehr als 200 mm aufweisen.

Damit die Einzelportionen nach dem Stanzen sich nicht wieder verbinden, wird vorgeschlagen, dass die Portionen nach dem Stanzen separiert werden. Auch ist von Vorteil, wenn die Portionen nach dem Stanzen tiefgefroren werden, damit sie transport- und lagerfähig werden.

Ferner ist von Vorteil, wenn die Portionen nach dem Stanzen paniert werden. Vorzugsweise wird vorgeschlagen, dass das Verfahren für Geflügelfleisch, Fischfleisch oder Gemüse verwendet wird.

Ausführungsbeispiele des erfindungsgemäßen Verfahrens werden im folgenden näher beschrieben.

Ein verformbares Lebensmittel wie Fisch, Fleisch, Geflügelfleisch oder Gemüse wird im nicht gefrorenen Zustand oder im gering gefrorenen Zustand in die Form einer flachen Platte oder eines plattenförmigen Stranges gebracht. Danach wird das Lebensmittel auf eine Temperatur heruntergekühlt, bei der das Lebensmittel stanzfähig ist. Diese Temperatur liegt zwischen 1 bis minus 10 Grad insbesondere bei 2 bis minus 6 Grad. Danach wird das plattenförmige oder strangförmige Lebensmittel durch ein Stanzgitter oder durch eine Walze mit Stanzgitter in eine Vielzahl einzelner Lebensmittelportionen aufgeteilt. Ein Stanzen führt dazu, dass das Aufteilen keinerlei Verlust insbesondere durch Anfall von Sägespänen erzeugt.

Vor dem Stanzen besitzen die flachen Platten oder der plattenförmige Strang eine Dicke von 10 bis 40 mm, insbesondere von 15 bis 20 mm. Die durch das Stanzen hergestellten quaderförmigen insbesondere würfelförmigen Portionen besitzen eine Kantenlänge von nicht mehr als 200 mm. Das heißt die größte Kantenlänge ist maximal 200 mm.

Nach dem Portionieren durch Stanzen werden die einzelnen Portionen separiert, damit sie nicht zusammenbacken und danach werden die Portionen tiefgefroren. Alternativ können die einzelnen Portionen vor dem Tiefgefrieren paniert werden.

Ferner können die einzelnen Portionen vor dem Tiefgefrieren und während oder nach dem Stanzen durch Pressen verformt werden, so dass sie vor dem Panieren bzw. Tiefgefrieren nicht mehr eine quaderförmige oder würfelförmige Gestalt, sondern eine abgerundete Form besitzen. Dieses Verformen kann durch das Stanzgitter mit zusätzlichen Formflächen, durch die Stanzwalze mit zusätzlichen Formflächen und/oder nach dem Stanzen durch zusätzliche Formen erfolgen.

## Patentansprüche

1. Verfahren zum Portionieren gefrorener Lebensmittel insbesondere mit Stücken von Fleisch, Fisch und/oder Gemüse, wobei das Lebensmittel im nicht gefrorenen Zustand oder im gering gefrorenen nicht tiefgefrorenen Zustand in die Form einer flachen Platte oder eines plattenförmigen Stranges gebracht wird, **dadurch gekennzeichnet, dass** danach das Lebensmittel auf eine Temperatur heruntergekühlt wird, bei der das Lebensmittel stanzfähig ist, und dass dann das Lebensmittel durch ein Stanzgitter oder eine Walze mit Stanzgitter in eine Vielzahl von insbesondere quaderförmigen oder würfelförmigen Portionen aufgeteilt wird und dass während oder nach dem Stanzen die Portionen durch Pressen geformt werden, so dass die Portionen eine abgerundete Form besitzen, wobei das Pressformen durch das Stanzgitter mit zusätzlichen Formflächen oder die Stanzwalze mit zusätzlichen Formflächen und/oder nach dem Stanzen durch zusätzliche Formen erfolgt.

2. Verfahren nach Anspruch 1,**dadurch gekennzeichnet, dass** beim Stanzen das Lebensmittel eine Temperatur von minus 1 bis minus 10 Grad, insbesondere von minus 2 bis minus 6 Grad Celsius aufweist.

3. Verfahren nach einem der vorherigen Ansprüche, **dadurch gekennzeichnet, dass** beim Stanzen das Lebensmittel eine Dicke von 10 bis 40 mm insbesondere von 15 bis 20 mm aufweist.

4. Verfahren nach einem der vorherigen Ansprüche, **dadurch gekennzeichnet, dass** die Portionen eine größte Länge von nicht mehr als 200 mm aufweisen.

5. Verfahren nach einem der vorherigen Ansprüche, **dadurch gekennzeichnet, dass** die Portionen nach dem Stanzen und Formen separiert werden.

6. Verfahren nach einem der vorherigen Ansprüche, **dadurch gekennzeichnet, dass** die Portionen nach dem Stanzen und Formen tiefgefroren werden.

7. Verfahren nach einem der vorherigen Ansprüche, **dadurch gekennzeichnet, dass** die Portionen nach dem Stanzen und Formen paniert werden.

8. Verfahren nach einem der vorherigen Ansprüche, **dadurch gekennzeichnet, dass** es für Geflügelfleisch, Fischfleisch oder Gemüse verwendet wird.

## Claims

1. Method for portioning frozen foods, in particular comprising pieces of meat, fish and/or vegetables, the food being given the form of a flat slab or slab-like billet in the non-frozen state or in a slightly-frozen but not deep-frozen state, **characterised in that** the food is then cooled to a temperature at which the food is capable of being punched, **in that** the food is subdivided by a punching grid or a cylinder with punching grid into a multiplicity of, in particular, cuboidal or cubic portions and **in that** the portions are press-formed after punching so that the portions have a rounded shape, the press-forming being carried out by the punching grid with additional forming faces or by the punching cylinder with additional forming faces and/or by additional forming after punching.

2. Method according to claim 1, **characterised in that** during punching the food has a temperature of minus 1 to minus 10 degrees, in particular minus 2 to minus 6 degrees Celsius.

3. Method according to either of the preceding claims, **characterised in that** during punching the food has a thickness of 10 to 40 mm, in particular of 15 to 20 mm.

4. Method according to any one of the preceding claims, **characterised in that** the portions have a greatest length of not more than 200 mm.

5. Method according to any one of the preceding claims, **characterised in that** the portions are separated after punching and forming.

6. Method according to any one of the preceding claims, **characterised in that** the portions are deep-frozen after punching and forming.

7. Method according to any one of the preceding claims, **characterised in that** the portions are covered with bread-crumbs after punching and forming.

8. Method according to any one of the preceding claims, **characterised in that** it is used for poultry meat, fish meat or vegetables.

## Revendications

1. Procédé pour mettre en portions des aliments congelés, en particulier avec des morceaux de viande, de poisson et/ou de légumes, l'aliment étant amené,à l'état non congelé ou à l'état faiblement congelé non surgelé, sous la forme d'une plaque plate ou d'une corde en forme de plaque,
**caractérisé par le fait que** l'aliment est ensuite refroidi à une température à laquelle l'aliment est susceptible d'être découpé et qu'ensuite l'aliment est divisé en une pluralité de portions, en particulier parallélépipédiques ou cubiques, par un grillage estampé ou un rouleau avec grillage estampé et que, pendant ou après le découpage, les portions sont formées par compression de telle manière que les portions possèdent une forme arrondie, le formage par compression ayant lieu par le grillage estampé avec des surfaces de forme additionnelles ou le rouleau de découpage avec des surfaces de forme additionnelles et/ou après le découpage par des formes additionnelles.

2. Procédé selon la revendication 1,
**caractérisé par le fait que** l'aliment présente, lors du découpage, une température de moins 1 à moins 10 degrés, en particulier de moins 2 à moins 6 degrés Celsius.

3. Procédé selon l'une des revendications précédentes,
**caractérisé par le fait que** l'aliment présente, lors du découpage, une épaisseur de 10 à 40 mm, en particulier de 15 à 20 mm.

4. Procédé selon l'une des revendications précédentes,
**caractérisé par le fait que** les portions présentent une plus grande longueur de pas plus de 200 mm.

5. Procédé selon l'une des revendications précédentes,
**caractérisé par le fait que** les portions sont séparées après le découpage et le formage.

6. Procédé selon l'une des revendications précédentes,
**caractérisé par le fait que** les portions sont surgelées après le découpage et le formage.

7. Procédé selon l'une des revendications précédentes,
**caractérisé par le fait que** les portions sont panées après le découpage et le formage.

8. Procédé selon l'une des revendications précédentes,
**caractérisé par le fait qu'**il est utilisé pour de la chair de volaille, de la chair de poisson ou des légumes.
